# EUROPEAN PATENT APPLICATION

(11) **EP 3 402 174 A1**
(43) Date of publication of application: **14.11.2018**
(21) Application number: 17170928.0
(22) Date of filing: 12.05.2017
(51) Int. Cl.: H04M 1/725, H04M 19/04, H04W 4/04

(54) **A MOBILE PHONE MUTE SYSTEM**

(71) Applicant: Vestel Elektronik Sanayi ve Ticaret A.S., 45030 Manisa (TR)
(72) Inventor: SARIARSLAN, Muhammet Kürsat, 45030 Manisa (TR); ÖZEL, Ahmet, 45030 Manisa (TR); DILIK, Asli, 45030 Manisa (TR)
(74) Representative: Ascherl, Andreas

(57) **Abstract**

The present invention refers to a system and a method for muting a mobile phone. More specifically, the invention provides a system and a method for muting and un-muting the mobile phone. The system for muting a mobile phone according to the present invention preferably comprises a means for detecting an ambient light level of the mobile phone, a means for detecting movement of the mobile phone, and a means for identifying a predefined action on the mobile phone for obtaining a signal to turn on silent mode in the mobile phone. The silent mode of the mobile phone is turned on, when the ambient light level is dark and/or the movement of the mobile phone is null, after obtaining the signal of the predefined action. Similarly the conditions are reversed for un-muting the mobile phone.

## Description

This invention refers to a mobile phone mute system according to claim 1, and a method according to claim 8.

### Background of the Invention

Generally, mobile phone users often forget to keep the mobile phone in silent mode when they are in meeting. Similarly, users forget to turn off the silent mode when they come out from the meeting or when the meeting is over. However, forgetting things is human nature and that can be corrected by an automated system. Many options have been developed in the mobile phone manufacturing industry to provide a solution for this issue.

Prior art document "Efficient in-pocket detection with mobile phones" is a paper demonstrated about a novel approach to detect the common placements of a mobile phone such as "in pocket", "in bag" or "out of pocket or bag", from embedded proximity (IR) and light sensors. This prior art utilizes the sensor data fusion and pattern recognition to extract distinct features from sensor signals and classify the boundaries among these three phone placement contexts. The detection results are demonstrated on a Samsung Tizen mobile phone.

According to the prior art, a Motorola's product "DROID 2" contains special features in silent mode, volume, vibrate settings. If the user activates the smart profile settings such as either "Double tap to silence" or "Face down to vibrate" from the sound and display settings menu, the audible ringtones might become disabled and the handset can only vibrate. This behavior may be corrected in an upcoming software release. If the user activated the smart profile and the ringtones are no longer working, then the user may need to perform a factory data reset to clear the mobile phone or handset and restore factory default settings back to the mobile phone. This procedure may require the user to sign-in back into Google and set-up the user account all over again. When the user connects the handset again online, an alert message is generated for the user that it is recommended not to activate the smart profile again until the behavior is corrected.

The subject-matter of the document "Efficient in-pocket detection with mobile phones" does not contain any information about turning on the silent mode over the pocket with applying tap on the smart device. Also, there is no information about auto turn of the silent mode function. Even in the Motorolo product "DROID 2" does not contain any information about auto turn off the silent mode function.

### Object of the Invention

It is therefore the object of the present invention to provide a system, in particular a system for muting a mobile phone, and a method that solves the problem efficiently compared to the known devices and methods.

### Description of the Invention

The before mentioned object is solved by a system for muting a mobile phone according to claim 1. The system for muting a mobile phone according to the present invention preferably comprises a means for detecting an ambient light level of the mobile phone, a means for detecting movement of the mobile phone, and providing a set of predefined action on the mobile phone for obtaining a signal to turn on the silent mode in the mobile phone. The silent mode of the mobile phone is turned on, when the ambient light level is dark, after receiving the predefined action from the mobile phone.

This solution is beneficial since the user can turn on the silent mode for his/her mobile phone simply by using predefined actions. Similarly, the system allows the user to turn-off the silent mode in the mobile phone by interacting with the mobile phone display.

Further preferred embodiments are subject-matter of dependent claims and/or of the following specification parts.

According to a preferred embodiment of the present invention, the silent mode of the mobile phone is turned on, when the movement of the mobile phone is null, after receiving this predefined action. The system gets activated when the phone starts ringing and consequently when the predefined action is received by the system. The predefined action can include a single tapping, a double tapping, shaking, or a predefined action defined by user. During night time, a simple move of the mobile phone can turn on the silent mode of the mobile phone. After turning on the silent mode of the mobile phone, the system can maintain the silent mode until it is changed by the user. The system turns off the silent mode when the movement of the mobile phone is detected. The system turns off the silent mode when the ambient light level is not dark.

This is beneficial since the invention can be implemented to any smart device which has motion and light sensors.

The before mentioned object is also solved by a method for muting a mobile phone. Said method preferably comprises the steps: checking an ambient light level of the mobile phone, when the mobile phone receives a call, activating sensors for detecting movement of the mobile phone, when the ambience is at low light level, detecting a predefined action for muting the mobile phone, after the mobile phone starts ringing, and turning on the silent mode in the mobile phone after identifying the predefined action.

According to a preferred embodiment of the present invention, the method further comprising the steps of, turning off the silent mode of the mobile phone when the ambient light level is not dark; turning off the silent mode of the mobile phone when the movement is identified, and turning off the silent mode of the mobile phone when the mobile phone is interrupted by pressing keys on mobile phone.

Further benefits, goals and features of the present invention will be described by the following specification of the attached figures, in which components of the invention are exemplarily illustrated. Components of the devices and method according to the inventions, which match at least essentially with respect to their function can be marked with the same reference sign, wherein such components do not have to be marked or described in all figures.

The invention is just exemplarily described with respect to the attached figures in the following.

### Brief Description of the Drawing

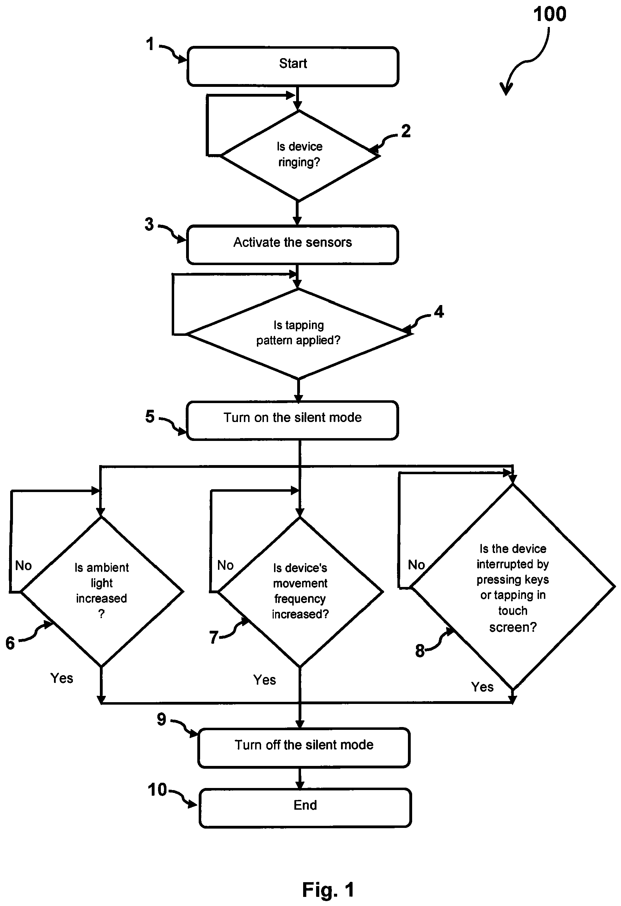

- Fig. 1: illustrates the flow chart for the system for muting the mobile phone according to the present invention.

### Detailed Description of the Drawing

Fig. 1 illustrates the flow chart 100 for the system for muting the mobile phone according to the present invention. The flow chart comprises the method involved in the system for muting and un-muting mobile phone. The system for muting a mobile phone according to the present invention preferably comprises a means for detecting an ambient light level of the mobile phone, a means for detecting movement of the mobile phone, and a means for identifying a predefined action on the mobile phone for obtaining a signal to turn on silent mode in the mobile phone. The silent mode of the mobile phone is turned on, when the ambient light level is dark, after obtaining the signal of the predefined action. Further, the silent mode of the mobile phone is turned on, when the movement of the mobile phone is null, after obtaining the signal of the predefined action.

The method involved in the system for muting and un-muting the mobile phone starts 1 with detecting whether the mobile phone is ringing 2 or not. If the mobile phone rings means then the system may activate the sensors 3 for detecting ambient light level, movement of the mobile phone and the predefined action. Otherwise the mobile can be in normal mode. The predefined action may include but is not limited to a single tapping, a double tapping, swiping, shaking, and so on. When the predefined action is detected 4, the system activates the silent mode 5. Otherwise the mobile phone can be in normal ringing mode.

For example, when the call come and if a user kept the mobile phone in his pocket and attending a meeting, the system turn on the silent mode once the user tap on the mobile phone. Hence, the ambient light level is dark and the movement of the mobile phone is also null.

Once the mobile phone is in silent mode 5, for un-muting the mobile phone if any one of the condition gets satisfied. First condition is, that the system may check whether the ambient light level increased or not 6. If the system detects increase in ambient light level 6 then the system can turn off the silent mode 9. Otherwise the mobile phone remains in silent mode 5. Second condition is that the system may check whether frequent movement of the mobile phone is detected or not 7. If the system detects the frequent movement 7 then the system can turn off the silent mode 9. Otherwise the mobile phone remains in silent mode 5. Third condition is that the system may check whether any predefined action of the mobile phone is detected or not 8. If the system detects any predefined action 8 then the system can turn off the silent mode 9. Otherwise the mobile phone remains in silent mode 5. The system ends the process 10 when the mobile phone turns off the silent mode.

For example, let the mobile phone is in silent mode, the system can turn off the silent mode if the user kept the mobile phone that is exposed to bright ambience or interacting on the mobile phone or user the mobile phone is in movement.

The mobile phone can check the ambient light level for example whether the surrounding is dark or bright. Similarly the mobile phone movement is also checked for turning off or on the silent mode of the mobile phone. This invention can work in any smart device, which has motion and light sensors.

Thus, the present invention refers to a system and a method for muting a mobile phone. More specifically, the invention provides a system and a method for muting and un-muting the mobile phone. The system for muting a mobile phone according to the present invention preferably comprises a means for detecting an ambient light level of the mobile phone, a means for detecting movement of the mobile phone, and a means for identifying a predefined action on the mobile phone for obtaining a signal to turn on silent mode in the mobile phone. The silent mode of the mobile phone is turned on, when the ambient light level is dark and/or the movement of the mobile phone is null, after obtaining the signal of the predefined action. Similarly the conditions are reversed for un-muting the mobile phone.

### List of reference numbers

- 1: start of the method
- 2: is mobile phone or device ringing
- 3: activate the sensor
- 4: is tapping pattern or predefined action identified
- 5: turn on the silent mode
- 6: is ambient light level increased
- 7: is movement frequency increased
- 8: is the device interrupted by pressing keys or tapping touch screen
- 9: turn off silent mode
- 10: end of the method or process
- 100: flow chart method involved in the mobile phone mute system

## Claims

1. A system for muting a mobile phone which comprises:
a means for detecting an ambient light level of the mobile phone;
a means for detecting movement of the mobile phone;
**characterized by**
providing a set of predefined action on the mobile phone; and
wherein muting of the mobile phone is turned on when the ambient light level of the mobile phone is dark, after receiving the predefined action from the mobile.

2. The system of claim 1, wherein muting of the mobile phone is turned on when the movement of the mobile phone is null, after receiving the predefined action from the mobile.

3. The system of claim 1, wherein the system gets activated when the phone starts ringing and consequently when the predefined action received by the system.

4. The system of claim 1, wherein the predefined action includes a single tapping, a double tapping, shaking, or a predefined action defined by user.

5. The system of claim 1, wherein during night time a simple move of the mobile phone turns on the mute option of the mobile phone.

6. The system of claim 1, wherein after turning on the silent mode of the mobile phone, the system maintains the silent mode until changed by the user.

7. The system of claim 1, wherein the system turns off the silent mode when the ambient light level is not dark.

8. The system of claim 1, wherein system turns off the silent mode when the movement of the mobile phone is detected.

9. The system of claim 1, wherein the system turns off the silent mode when the mobile phone is interrupted by pressing keys on mobile phone.

10. A method for muting a mobile phone comprising the steps of,
checking an ambient light level of the mobile phone, when the mobile phone receives a call;
activating sensors for detecting movement of the mobile phone, when the ambience is at low light level;
detecting a predefined action for muting the mobile phone, after the mobile phone starts ringing; and
turning on the silent mode in the mobile phone after identifying the predefined action.

11. The method of claim 10, wherein the method further comprising the steps of:
turning off the silent mode of the mobile phone when the ambient light level is not dark.

12. The method of claim 10, wherein the method further comprising the steps of:
turning off the silent mode of the mobile phone when the movement is identified.

13. The method of claim 10, wherein the method further comprising the steps of: turning off the silent mode of the mobile phone when the mobile phone is interrupted by pressing keys on mobile phone.
